# EUROPÄISCHE PATENTSCHRIFT

(11) **EP 0 990 220 B1**
(45) Veröffentlichungstag und Bekanntmachung des Hinweises auf die Patenterteilung: **21.02.2001**
(21) Anmeldenummer: 98912186.8
(22) Anmeldetag: 15.04.1998
(51) Int. Cl.: G06K 19/04, G11B 7/00, G11B 17/04

(54) **VISITENKARTE MIT CD-ROM**
VISITING CARD WITH CD ROM
CARTE DE VISITE AVEC CD-ROM

(30) Priorität: 25.06.1997 CH 153797; 05.03.1998 CH 52698
(43) Veröffentlichungstag der Anmeldung: 05.04.2000
(73) Patentinhaber: Adivan High Tech Ltd., Hamilton HM 12 (BM)
(72) Erfinder: FISCHER, Gerhard, CH-6032 Emmen (CH)
(74) Vertreter: Patentanwaltsbüro Feldmann AG
(86) Internationale Anmeldenummer: CH9800140
(87) Internationale Veröffentlichungsnummer: WO9900765

(56) Entgegenhaltungen:
- EP-A- 0 292 720
- EP-A- 0 343 982
- US-A- 3 839 601
- PATENT ABSTRACTS OF JAPAN vol. 016, no. 218 (P-1357), 21.Mai 1992 & JP 04 040586 A (NIPPON TELEGR & TELEPH CORP), 10.Februar 1992,
- PATENT ABSTRACTS OF JAPAN vol. 005, no. 048 (P-055), 7.April 1981 & JP 56 003471 A (MATSUSHITA ELECTRIC IND CO LTD), 14.Januar 1981,

## Beschreibung

Die Erfindung betrifft eine Visitenkarte nach dem Oberbegriff des unabhängigen Patentanspruches.

Visitenkarten sind seit langem allgemein bekannt und gebräuchlich. Sie werden mit Namen, Firmenbezeichungen und andern visuell erkennbaren Informationen auf Papier oder andern Trägermaterialien bedruckt und versehen. Da das Format relativ klein ist, kann nur eine sehr begrenzte Informationsmenge darauf gedruckt werden. Diese Menge von Informationen genügt bei einer direkten Uebergabe an einen Gesprächspartner. Bei einer späteren Betrachtung der Visitenkarte wäre man aber meist froh, wenn man bedeutend mehr Informationen im Zusammenhang mit dem Uebergeber resp. der Firma hätte, um das Erinnerungsvermögen zu aktivieren und zu ergänzen.

Aus US 3,839,601 (Kimura) ist eine Apparatur zum Lesen von rechteckigen CD Karten bekannt. Die verwendeten Karten haben drei Positionierhilfen. Diese bestehen aus Durchbohrungen. Das Lesegerät hat drei Nocken, welche in die Durchbohrungen der Karte eingreifen. Eine solche Rechteckige Aufnahmekarte wird im Lesegrät lagefest eigelegt. Das Lesegerät weist eine rotierende Leseeinrichtung auf. Das heisst, es wird eine besonderes Lesegerät benötigt, bei dem die Karte Lagefest bleibt und die Leseeinrichtung um die Karte dreht. Diese Karten können unmöglich mit einem üblichen CD-Gerät gebraucht werden. Die CD-Karte weist somit Positionierhilfen auf, aber keine Mittel zum Zentrieren in einem üblichen CD-Laufwerk.

JP 04040586 (Nippon Telegr.) zeigt eine Kreditkarte mit CD-Lesebereich. Sie hat ein Zentrierloch zur Aufnahme des Dornes in einem CD-Gerät. Diese Karte kann mit dem Zentrierloch auf einen Antriebsdorn in einem CD- Laufwerk aufgesteckt werden. Dies ist nur bei einem von oben vollständig frei zugängliche Laufwerk, beispielsweise einem Labtop-Laufwerk möglich. Da der CD-Bereich exzentrisch auf der Karte angeordnet ist. Wird eine Verwendung dieser Karte jedes Laufwerk, bei welchem die Karte gedreht wird, zerstören.

Aufgabe der Erfindung ist es, eine Visitenkarte anzugeben, welche in herkömmlicher Weise mit Informationen bedruckt werden kann und zusätzlich ermöglicht eine grosse Menge Informationen zu vermitteln.

Diese Aufgabe wird durch die in den Patentansprüchen angegebene Erfindung gelöst.

Ein zusätzlicher Vorteil der Erfindung ist, dass als Informationen beispielsweise ganze Firmeninformationen, wie Firmenprogramm, Kataloge, Bestellformulare, und beispielsweise sogar automatischer Internet-Einstieg in die Home-Page der Firma auf der Visitenkarte vorhanden sein können.

Ein weiterer Vorteil der Erfindung besteht darin, dass die erfindungsgemässe Visitenkarte auch in verschiedenen Formaten herstellbar ist.

Die Erfindung wird nachstehend im Zusammenhang mit den Zeichnungen beschrieben. Es zeigen:
- Figur 1: ein Beispiel einer erfindungsgemässen Visitenkarte in einer Ansicht von unten;.
- Figur 2: die Visitenkarte im CD-ROM Laufwerk eingelegt.
- Figur 3: ein Beispiel einer erfindungsgemässen Visitenkarte im Querschnitt;

Die Erfindung wird nun im Zusammenhang mit den Zeichnungen näher beschrieben.

Der Grundgedanke der Erfindung besteht in der Kombination von Visitenkarte und CD-ROM. Einerseits bestehen Visitenkarten meist aus Papier, Halbkarton oder Kunststoff. Sie haben ein bestimmtes Format etwa das gleiche, wie es bei den Kreditkarten üblich und weltweit sehr verbreitet ist. Andererseits wurdenvon verschiednen Firmen auch bereits CD- mit Musik oder mit Katalog und Firmeninformationen versandt. Allerdings kann man diese nicht in Visitenkartenfächer einlegen, da sie zu gross und rund sind. Dies gilt auch für die Mini-CD's.

Die neue Visitenkarte ermöglicht nun beides. Es handelt sich um eine CD, welche im Format den Visitenkarten entspricht und trotzdem in einem normalen CD-Laufwerk eingelegt und gelesen werden kann. Aus der Visitenkarte wird also eine Visitenkarten CD.

Bekanntlich weist ein übliches CD-Laufwerk einen zentralen Antriebsdorn auf und eine kreisförmige Laufwerkzentrierung, in welche eine CD eingelegt wird. Die Laufwerkzentrierung zentriert die eingelegte CD und durch den Antriebsdorn wird sie im Laufwerk angetrieben. Während dem Betrieb, befindet sich die CD in und auf einem kleinen Luftkissen in der Laufwerkszentrierung geführt und durch den Dorn und der zentralen Auflage angetrieben. Damit normale CD und Mini-CD im gleichen Laufwerk benützt werden können, ist die Zentrierung für die CD's in zwei Stufen für die beiden verschiedenen Durchmesser angepasst ausgeführt. Antrieb und Zentrierung werden bekanntlich voneinander mechanisch getrennt, damit die CD's nicht im Bereich ihrer Antriebsöffnung mechanisch belastet und beschädigt werden.

Es wurden bereits bisher gewisse CD in bestimmten, von der runden Scheibe abweichenden Form zu Reklamezwecken hergestellt. Allerdings weisen diese eine Form auf, bei welcher der Rand immer an mehreren Orten dem normalen Umfang von DC entspricht. Wenn solche CD's im Laufwerk eingelegt sind, so greift der Antriebsdorn in die Zentrale Antriebsausnehmung der CD und die CD liegt mit mehreren Punkten ihres Umfanges innerhalb am Zentrierrand des in der Laufwerkszentrierung an. Diese CD's werdn als "shaped CD" bezeichnet. Ihre Form wird aus einer üblichen runden CD herausgefräst.

Eine CD mit einer Grösse und Form einer Visitenkarte ist aber zu klein, um in der Laufwerkszentrierung anzuliegen. Sie entspricht in keiner Weise dem Format der normalen oder der Mini-CD. Das entscheidende Problem ist die Zentrierung im üblichen CD-Laufwerk. Dies wird nun gelöst, in dem die Visitenkarte als CD-Rom im Visitenkartenformat gestaltet wird und mit geeigneten Mitteln zum zentrieren im CD-Laufwerk versehen wird.

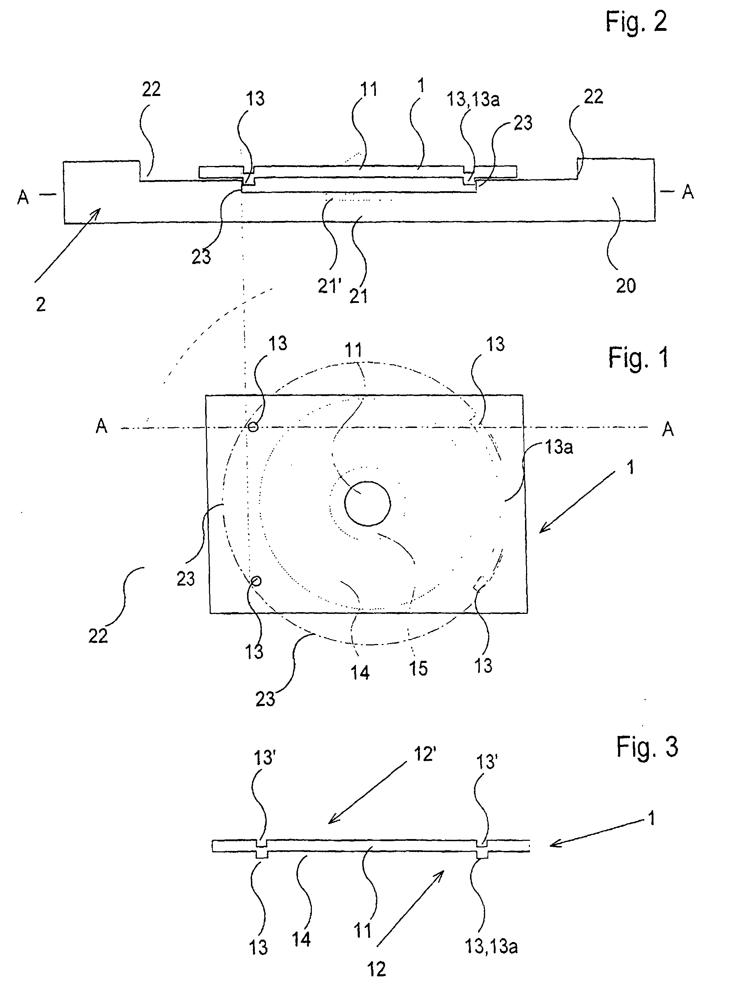

Eine erfindungsgemässe Visitenkarte 1 ist in der Figur 1 von unten gesehen dargestellt. Sie weist ein Format, wie es für Visitenkarten üblich ist auf. Sie ist wie eine übliche CD aus dem gleichen Material und gleichartig hergestellt. In der Mitte befindet sich eine Antriebsausnehmung 11, welche von einem Auflagebereicht 15 umrandet ist. Daran schliesst sich der mit Daten beschreibbare und im CD-Laufwerk lesbare Datenbereich 14 an. Auf einem Kreis angeordnet sind eine Anzahl, hier vorzugsweise vier, Zentriernocken 13 angeordnet. Die Zentriernocken 13 sind so angeordnet, dass, wenn die Visitenkarte im CD-Laufwerk eingelegt ist, die Zentriernocken 13 am Zentrierabsatz 23 (siehe Figur 2) anliegen und die Visitenkarte zentriert halten. Die Mittel zum Zentrieren im CD Laufwerk können statt eine Anzahl einzelne Noppen oder Nocken 13 alternativ beidseitig symmetrisch zur Antriebsausnehmung 11 angeordnete Zentrierwulste 13a umfassen. In der Figur 2 ist dies nur auf einer Seite dargestellt. Diese beschreiben je einen Kreissektor, wobei der Radius so gewählt ist, dass die Aussenkanten der Zentrierwulste 13a mit minimalem Spiel am Zentrierabsatz 23 anzuliegen kommen.

In der Figur 2 ist eine erfindungsgemässe Visitenkarte 1 in einer Laufwerkschublade 20 eines CD Laufwerkes 2 eingelegt. Sie ist im Schnitt A - A gemäss Figur 1 dargestellt. Es ist gut ersichtlich, wie die Laufwerkschublade 20 einen ersten Zentrierabsatz 22 für übliche CD's und einen zweiten Zentrierabsatz 23 für Mini-CD's aufweist. Antriebsdorn 21 und Antriebsauflage 21' des Laufwerkes und Antriebsaufnehmung 11 der Visitenkarte sind nur angedeutet, da sie sich nicht im Achnitt A - A befinden. Die Visitenkarte 1 liegt nun mit ihren nach unten ragenden Zentriermitteln 13, 13a an der Zentrierkante 23 für Mini-CD's des Laufwerkes an. Dies garantiert ein sicheres Zentrieren der Visitenkarte 1 in Laufwerk. Gleichzeitig liegt sie nactürlich auf der Antriebsauflage 21' an und der Antriebsdorn 21 ragt durch die Antriebsausnehmung 11. Beim Drehen der Visitenkarte bildet sich ein minimales Luftkissen zwischen Visitenkarte und Schublade respektive der Zentrierkante 23. So wird die Visitenkarte beim Einlegen ins Laufwerk eindeutig und sauber zentriert und beim Laufen wird sie mechanisch nicht beansprucht.

Die Herstellung der Form erfolgt nun nicht durch Ausfräsen der Form aus einer fertigen CD, sondern durch einen Stanzvorgang. Damit können in einem einzigen Arbeitsgang die Form und die Mittel zum Zentrieren der Visitenkarten-CD hergestellt werden. Damit die Form am Umfang sauber geschnitten wird und dabei die Zentriernocken geformt werden können, muss der Stanzvorgang langsam ablaufen, so dass beim Erzeugen der Zentriernocken 13 eine Verformung, aber kein Durchbrechen geschieht. Dabei werden die Zentriernocken 13 durch kleine Stempel im Stanzwerkzeug langsam nach unten gedrückt und das Material plastisch verformt. Dabei entstehen natürlich auf der bedruckbaren Oberseite 12 minimale Einbuchtungen 13'. Während dem Stanzvorgang wird einerseits die Form ausgestanzt und andererseits im Bereich der zu bildenden Zentriernocken 13 das Material nur verformt. Dieser Vorgang macht möglich, die Herstellung der Visitenkarte als Visitenkarten-CD in einem Arbeitgang und daher sehr kostengünstig und schonend auszuführen. Natürlich ist es auch möglich, die Zentriernocken in einem separaten Arbeitsgang auf die Unterseite 12 aufzukleben.

Auf der Oberseite kann die Visitenkarte wie bisher mit Namen, Adresse und weiteren Angaben normal bedruckt sein. Auf der unteren, der Datenseite handelt es sich um ein übliche CD, welche mit Computer lesbaren Daten beschrieben sein kann. Beispielsweise kann ein Firmenprofil, ein Firmenkatalog und ähnliche Informationen inklusive Multimedia aufgespielt sein. Es ist aber auch möglich ein ganzes Computerprogramm darauf zu speichern. Als Beispiel sein ein automatischer Zugang zu einem Computer oder einer Home-Page einer Firma genannt.

Die Technik der Herstellung der Visitenkarte 1 und der Anordnung der Zentriernocken 13 macht nun möglich, die Visitenkarte auch in annähernd beliebiger Form, gemeint ist mit annähernd beliebiger Aussenkontur, auszugestalten, da sie im Laufwerk durch die Zentriernocken 13 und nicht durch den äusseren Umfang zentriert wird. Beispielsweise kann eine solche Visitenkarte die Aussenkontur eines Firmensignetes aufweisen.

## Patentansprüche

1. Visitenkarte (1) aus Kunststoff mit einer bedruckten Oberseite (12') mit direkt visuell lesbaren Informationen, wobei die Unterseite (12) der Visitenkarte (1) mit elektronisch aufbereiteten mittels einem CD-Laufwerk, mit einer Laufwerkschublade mit Zentrierabsatz (23) für Mini-CD, optisch oder akustisch wiedergebbaren Daten versehen ist, dadurch gekennzeichnet, dass die Visitenkarte (1) von der Unterseite (12) nach unten ragende Mittel zu ihrer zentrierenden Aufnahme beim Einlegen in die CD-Laufwerkschublade (2) aufweist, welche mit ihrem auf einem Kreissektor liegenden Aussenkanten am Zenrierabsatz (23) für Mini-CD der Laufwerkschublade (2) zum Anliegen kommen.

2. Visitenkarte nach Anspruch 1, dadurch gekennzeichnet, dass die Mittel zur zentrierten Aufnahme im CD-Laufwerk aus einer Anzahl von der Unterseite (12) nach unten ragenden Zentriernocken (13) bestehen, wobei die Zentriernocken (13) so angeordnet sind, dass sie im, in ein CD-Laufwerk (2) eingelegten Zustand der Visitenkarte, am Zentrierabsatz (23) für Mini-CD's mindestens annähernd anliegen.

3. Visitenkarte nach Anspruch 1, dadurch gekennzeichnet, dass die Mittel zur zentrierten Aufnahme im CD-Laufwerk aus einer Anzahl von der Unterseite (12) nach unten ragenden Zentrierwulste (13a) bestehen, wobei die Zentrierwulste (13a) so angeordnet sind, dass sie im, in ein CD-Laufwerk (2) eingelegten Zustand der Visitenkarte, am Zentrierabsatz (23) für Mini-CD's mindestens annähernd anliegen.

4. Visitenkarte nach Anspruch 2 oder 3, dadurch gekennzeichnet, dass die Zentriernocken (13) oder die Zentrierwulste (13a) durch plastisches Verformen erzeugt sind.

5. Visitenkarte nach Anspruch 2 oder 3, dadurch gekennzeichnet, dass die Zentriernocken (13) oder Zentrierwulste (13a) auf die Unterseite (12) aufgeklebt sind.

6. Visitenkarte nach einem der Ansprüche 1 bis 5, dadurch gekennzeichnet, dass sie eine am Umfang beliebige Form als Aussenkontur aufweist.

7. Visitenkarte nach Anspruch 6, dadurch gekennzeichnet, dass die Form durch einen Stanzvorgang aus einer CD erzeugbar ist.

8. Visitenkarte nach Anspruch 7, dadurch gekennzeichnet, dass die Zentriernocken (13) oder die Zentrierwulste (13a) und die Form im gleichen Stanzvorgang erzeugbar sind.

## Claims

1. A visiting card (1) of plastic with a printed upper side (12') with directly visually readable information, wherein the lower side (12) of the visiting card (1) is provided with electronically processed data which can be optically or acoustically reproduced by a CD drive with drive drawer with a centering shoulder (23) for Mini-CD, characterised in that the visiting card (1) comprises means extending from the lower side (12) downwards for its centered accommodation in a CD drive,. which means come into bearing on the centering shoulder (23) of the Mini-CD of the drive drawer with its outside linings lying on circlular sector.

2. A visiting card according to claim 1, characterised in that the means for the centered accommodation in the CD drive consists of a number of centering cams (13) projecting downwardly from the lower side (12), wherein the centering cams (13) are arranged such that in a condition of the visiting card inserted into a CD drive they at least approximately bear on the centering shoulder (23) for Mini-CD's.

3. A visiting card according to claim 1, characterised in that the means for the centered accommodation in the CD drive consists of a number of centering beads (13a) projecting downwardly from the lower side (12), wherein the centering beads (13a) are arranged such that in a condition of the visiting card inserted into a CD drive they at least approximately bear on the centering shoulder (23) for Mini-CD's.

4. A visiting card according to claim 2 or 3, characterised in that the centering cams (13) or the centering beads (13a) are produced by plastic deformation.

5. A visiting card according to claim 2 or 3, characterised in that the centering cams (13) or centering beads (13a) are adhesed onto the lower side (12).

6. A visiting card according to one of the claims 1 to 5, characterised in that it has any shape at the circumference.

7. A visiting card according to claim 6, characterised in that the shape may be produced by a punching procedure from a CD.

8. A visiting card according to claim 7, characterised in that the centering cams (13) or the centering beads (13a) and the shape can be produced in the same punching procedure.

## Revendications

1. Carte de visite en matière synthétique ayant une face supérieure imprimée d'informations directement visibles, ayant une face intérieure munie de données préparées de manière électronique et reproductibles de manière optique ou acoustique au moyen d'un lecteur de CD, ayant un tiroir de lecteur avec un collet de centrage (23) pour mini-CD, caractérisée en ce que la carte de visite contient des moyens pour sa réception centrée dans le tiroir (2) du lecteur de CD, lesquelles moyens s'étendent de la face inférieure (12) vers le bas et s'appuient au collet de centrage (23) pour mini-CD du tiroir du lecteur (2) avec ses bords extérieurs qui sont sur un secteur circulaire.

2. Carte de visite selon la revendication 1, caractérisée en ce que les ergots de centrage (13) sont disposés de telle manière que dans la position introduite de la carte de visite dans un lecteur de CD (2) ils s'appuient, au moins approximativement, au collet de centrage (23) pour mini-CD.

3. Carte de visite selon la revendication 1, caractérisée en ce que les bourrelets de centrage (13a) sont disposés de tells manière que dans la position introduite de la carte de visite dans un lecteur de CD (2), ils s'appuient, au moins approximativement, au collet de centrage (23) pour mini-CD.

4. Carte de visite selon la revendication 2 ou 3, caractérisée en ce que les ergots de centrage (13) ou les bourrelets de centrage (13a) sont obtenus par déformation plastique.

5. Carte de visite selon la revendication 2 ou 3, caractérisée en ce que les ergots de centrage (13) ou les bourrelets de centrage (13a) sont collés sur la face inférieure (12).

6. Carte de visite selon l'une quelconque des revendications 1 à 5, caractérisée en ce qu'à la circonférence extérieure elle présente, en tant que contour extérieur, une forme quelconque désirée.

7. Carte de visite selon la revendication 6, caractérisée en ce que la forme peut être réalisée par une opération d'estampage à partir d'un CD.

8. Carte de visite selon la revendication 7, caractérisée
en ce que les ergots de centrage (13) ou les bourrelets de centrage (13) ainsi que la forme peuvent être obtenus par la même opération d'estampage.
